# EUROPÄISCHE PATENTSCHRIFT

(11) **EP 0 947 312 B1**
(45) Veröffentlichungstag und Bekanntmachung des Hinweises auf die Patenterteilung: **01.03.2006**
(21) Anmeldenummer: 99106398.3
(22) Anmeldetag: 27.03.1999
(51) Int. Cl.: B32B 3/12, B32B 27/12, B32B 3/02, E04C 2/36

(54) **Bauteil**
Structural member
Elément de construction

(30) Priorität: 03.04.1998 DE 29806139 U
(43) Veröffentlichungstag der Anmeldung: 06.10.1999
(73) Patentinhaber: Staudenmayer, Winfried, 73084 Salach (DE)
(72) Erfinder: Staudenmayer, Winfried, 73084 Salach (DE)
(74) Vertreter: Dreiss, Fuhlendorf, Steimle & Becker

(56) Entgegenhaltungen:
- DE-A- 19 533 394
- FR-A- 2 216 825
- US-A- 4 879 152

## Beschreibung

Die vorliegende Erfindung bezieht sich auf ein Bauteil nach dem Oberbegriff des Anspruchs 1.

Bei einem derartigen aus der US-A-4 879 152 bekannten Bauteil sind die Längs- und Querränder durch sperrholzartig geschichtete Kanthölzer eingegrenzt sind, wobei diese an ihrer Ober- und Unterseite von den beiden Polyesterharzschichten überdeckt sind. Daraus ergibt sich, dass ein Befestigen dieses Bauteils an bzw. mit anderen Bauteilen ausschließlich über den Umlaufenden Holzrand erfolgen kann und dass andererseits ein Einsatz derartiger Bauteile in beispielsweise Feuchträumen oder Nasszellen nicht erfolgen kann, da kein undurchbrochener Feuchtigkeitsabschluss des Bauteils gegenüber außen erreicht ist.

Bei einem anderen ähnlich dem vorgenannten aufgebauten Bauteil, wie es aus der EP-A-0 308 355 bekannt ist, ist ein Randabschluss entweder in Form einer Umhüllung aus dekorativem Schichtmaterial oder aus einem das Bauteil umgebenden Rahmen aus Schichtmaterial aufgebaut. Auch in diesen Fällen ist weder ein undurchbrochener Feuchtigkeitsabschluss noch ein einfaches Verbindungselement vorgesehen.

Aufgabe der vorliegenden Erfindung ist es, ein Bauteil der eingangs genannten Art zu schaffen, das auch in seiner leichtgewichtigen wabenartigen Ausgestaltung in einfacher Weise einen undurchbrochenen Feuchtigkeitsabschluss der ermöglicht, der auch dann keinen Schaden nimmt, wenn das Bauteil an bzw. mit einem anderen Bauteil verbunden wird.

Zur Lösung dieser Aufgabe sind bei einem Bauteil der genannten Art die im Anspruch 1 angegebenen Merkmale vorgesehen.

Durch die erfindungsgemäßen Maßnahmen ist eine sehr einfache Möglichkeit eines Randabschlusses des Bauteils gegeben, der einerseits zu einem undurchbrochenen Feuchtigkeitsabschluss und andererseits zu einer einfachen Befestigungsmöglichkeit an bzw. mit anderen Bauteilen führt.

In bevorzugter Weise sind dabei die Merkmale nach Anspruch 2 vorgesehen.

Weitere Vorteilhafte Ausgestaltungen hinsichtlich des Aufbaus des Bauteils ergeben sich aus einem oder mehreren der Ansprüche 3 bis 6.

Vorteilhafte Ausgestaltungen in der Anwendung eines derartigen Bauteils ergeben sich aus den Merkmalen des Anspruchs 7 bzw. 8.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer perspektivischer Darstellung ein Bauteil mit Wabenkern gemäß einem ersten Ausführungsbeispiel vorliegender Erfindung,
- Figur 2: in vergrößerter Darstellung einen Schnitt längs der Linie II-II der Figur 1,
- Figur 3: in einem schematischen, teilweise abgebrochenen Schnitt einen Teilbereich einer Nasszelle mit einem Bauteil gemäß Figur 1 bzw 2 und einem Bauteil mit Wabenkern gemäß einem zweiten und dritten Ausführungsbeispiel vorliegender Erfindung und
- Figur 4: eine der Figur 3 entsprechende Darstellung, jedoch bei einer Variante.

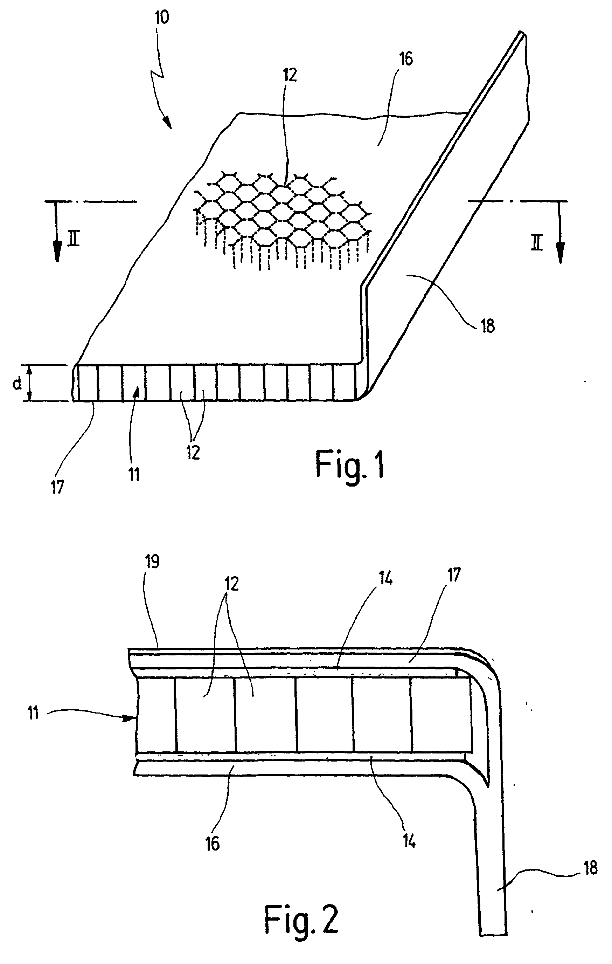

Das in den Figuren 1 und 2 dargestellte Bauteil 10 gemäß einem ersten Ausführungsbeispiel dient der Verwendung als Wandbauteil. Das Bauteil 10 besitzt als flächiges Trägerelement 11 einen Wabenkern aus Kunststoff, hier aus Polypropylen. Der Wabenkern 11 besteht aus einer Anordnung von jeweils allseitig aneinander grenzenden Waben 12, die sich in Richtung der Dicke d des Bauteils erstrecken. Auf den beiden offenen Seiten der Waben 12 ist eine Vliesschicht 14 aus Polyester aufgebracht. Auf der jeweiligen Vliesschicht 14 ist der Wabenkern 11 mit einem Laminat 16 bzw. 17 aus einem glasfaserverstärkten Polyesterharz versehen. Beim dargestellten Ausführungsbeispiel sind die beiden Laminate 16 und 17 zu einem gegenüber der Dicke des Wabenkerns 11 wesentlich dünneren umgebogenen Rand 18 verlängert, an welchem diese unmittelbar aneinander liegen. Der Rand 18 des Bauteils 10 ist hier zwar nur an einer Längsseite vorgesehen, es versteht sich jedoch, daß der Rand 18 an zwei Längsseiten oder vorzugsweise rundum vorgesehen sein kann. An der Sichtseite des Bauteils 10 ist bei diesem Ausführungsbeispiel das Laminat 17 mit einer Oberflächen-Feinschicht 19 aus einem Polyesterharz versehen. Diese Oberflächen-Feinschicht 19 kann bspw. auch aus einem pigmentierten Polyesterharz bestehen.

Das Bauteil 10 ist bspw. in der Art und Weise hergestellt, dass zunächst in einer Form die Oberflächenfeinschicht 19 aufgespritzt und dann auf diese das Laminat 17 aufgespritzt wird, worauf auf das noch feuchte Laminat 17 der Wabenkern 11 gelegt wird, so dass sich zwischen dem Laminat 17 und der Vliesschicht 14 des Wabenkerns 11 eine innige Verbindung ergibt. Danach wird auf die andere Seite des Wabenkerns 11 auf die dortige Vliesschicht 14 das andere Laminat 16 aufgespritzt. Dies alles kann zusammen mit dem Rand 18 in einem einzigen Arbeitsgang erfolgen.

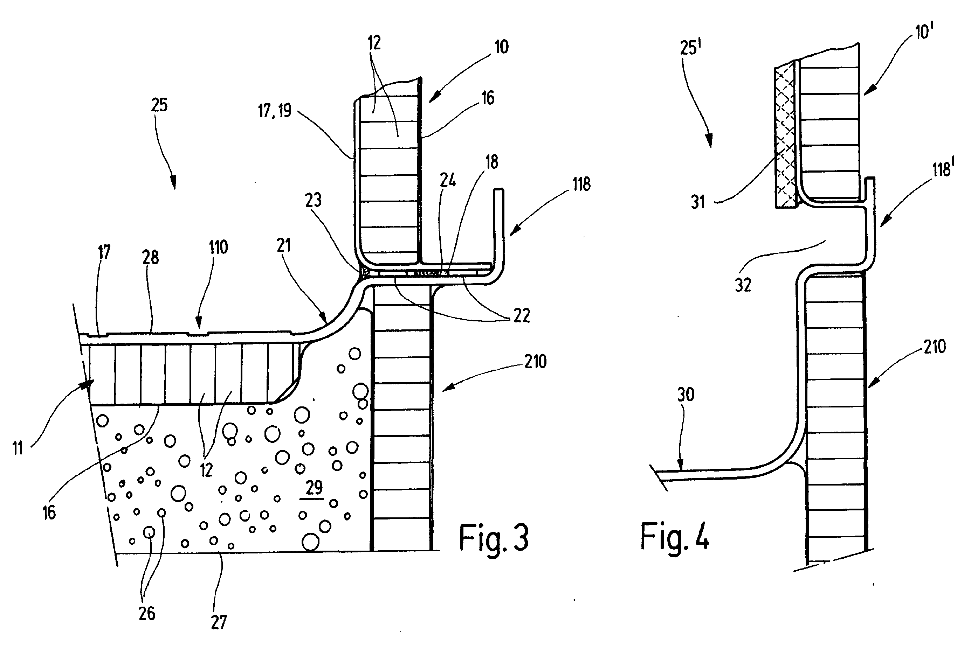

Figur 3 zeigt einen Teilbereich eine Nasszelle 25, in welcher außer dem Bauteil 10 ein zweites Bauteil 110 und ein drittes Bauteil 210, die jeweils mit einem Wabenkern 11 versehen sind, angeordnet sind. Diese Bauteile 110 und 210 sind im Wesentlichen in derselben Weise aufgebaut, d.h. mit dem Wabenkern 11 und den diesen umgebenden Laminatschichten 16 und 17 versehen. Da bei diesen Bauteilen 110 und 210 eine Sichtseite nicht vorhanden ist, fehlt hier die Oberflächenfeinschicht.

Das Bauteil 110 bildet den Boden der Nasszelle. Dieser Boden 110 ist über einen großflächigen Bereich, dem Trittbereich, an der Unterseite mit einem Wabenkern 11 versehen. Der Boden 110 ist mit einem umlaufenden L-förmigen Rand 118 versehen, zwischen dem und dem Bereich des Bodens 110 ein mit Wabenkern 11 ein konkaver Übergangsbereich 21 umlaufend vorgesehen ist. Sowohl der Übergangsbereich 21 als auch der Rand 118 sind aus den beiden Laminatschichten 16 und 17 gebildet.

Der Rand 118 nimmt eine mit dem Rand 18 versehene Seite des Wandbauteils 10 auf, wobei zwischen den beiden Rändern 18 und 118 Dichtbänder 22 und eine Silikonabdichtung 23 in dem dafür vorgesehenen schmalen Spalt 24 angeordnet sind. Es versteht sich, dass das Wandbauteil 10 derart angeordnet ist, dass die gegebenenfalls eingefärbte Oberflächenfeinschicht 19 die Sichtseite bildet.

Das dritte Bauteil ist eine Stütze 210 zum Abstützen des Bodens 110 gegenüber dem bauseitigen Gebäudeboden 27. Dazu ist die Stützwand 210 vorzugsweise umfangsseitig um den Boden 110 in einer der Richtung des Wandbauteils 10 entsprechenden Richtung angeordnet und an der Unterseite des Randes 118 mit dem Boden 110 verbunden. Unterhalb des Bodens 110 und von den Stützen 210 umgrenzt, ist der Raum 29 bis zum Gebäudeboden 27 mit Blähton 26 ausgefüllt. Beim dargestellten Ausführungsbeispiel ist der Boden 110 mit Noppen 28 versehen, er kann aber auch mit Fliesen, Granitplatten o.dgl. im Bereich des Wabenkerns 11 belegt sein.

Figur 4 zeigt eine Nasszelle 25', die ein Wandbauteil 10' und die Stütze 210 benutzt, während statt des Bodens 110 eine Bade- oder Duschwanne 30 vorgesehen ist, die längs ihres Randes 118' auf der Stütze 210 liegt. Es ist möglich, die Wanne 30 in einem bestimmten Bodenbereich mit einem Wabenkern 11 zu unterlegen. Bei diesem dargestellten Ausführungsbeispiel ist das Wandbauteil 10' mit Fliesen 31 belegt, die entweder unmittelbar auf die sichtseitige Laminatschicht 17 gelegt oder nach Aufrauhen der Oberflächenfeinschicht 19 auf diese gebracht bzw. geklebt ist. Das Wandbauteil 10' hat gegenüber dem Rand 118' der Wanne 30 eine Schattenfuge 32, die nicht mit Dichtmittel o.dgl. ausgefüllt und die gegenüber dem Spalt 24 gemäß Figur 3 breiter ausgebildet ist.

## Patentansprüche

1. Bauteil (10, 110) mit einem flächigen Trägerelement (11), das auf beiden Außenflächen mit einer Schicht (16, 17) aus glasfaserverstärktem Polyesterharz belegt ist, das flächige Trägerelement durch eine Wabenanordnung (11) aus Kunststoff, vorzugsweise Polypropylen gebildet ist und die aneinander angrenzenden Waben (12) sich in Richtung der Dicke des flächigen Trägerelements erstrecken, **dadurch gekennzeichnet, dass** das Bauteil (10, 110) an mindestens einer Längs- oder Querseite mit einem zur Rückseite hin umgebogenen Rand (18, 118) aus einem oder beiden glasfaserverstärkten Polyesterharzschichten (16, 17) bestehend versehen ist.

2. Bauteil nach Anspruch 1, **dadurch gekennzeichnet, dass** der Rand (18, 118) rundumlaufend ist.

3. Bauteil nach Anspruch 1 oder 2, **dadurch gekennzeichnet, dass** die Wabenanordnung (11) beidseitig mit einem Abdeckvlies (14) aus vorzugsweise Polyester überzogen ist.

4. Bauteil nach mindestens einem der Ansprüche 1 bis 3, **dadurch gekennzeichnet, dass** auf seiner Sichtseite eine weitere Schicht (19, 31) auf die glasfaserverstärkte Polyesterharzschicht (16, 17) aufgebracht ist.

5. Bauteil nach Anspruch 4, **dadurch gekennzeichnet, dass** die weitere Schicht auf der Sichtseite eine Oberflächen-Feinschicht (19) aus vorzugsweise Polyesterharz ist.

6. Bauteil nach Anspruch 4 **dadurch gekennzeichnet, dass** die weitere Schicht durch Fliesen (31), Granit o.dgl. gebildet ist.

7. Bauteil nach mindestens einem der vorhergehenden Ansprüche, **dadurch gekennzeichnet, dass** es ein Wandbauteil (10) ist, bei dem das flächige Trägerelement (11) ganzflächig vorgesehen ist.

8. Bauteil nach mindestens einem der Ansprüche 1 bis 6, **dadurch gekennzeichnet, dass** es eine Dusch- o. dgl. Wanne (30) ist, bei der das flächige Trägerelement (11) bodenseitig zumindest teilweise vorgesehen ist.

## Claims

1. Component (10, 110) with a two-dimensional support element (11), which is lined on both exterior faces with a layer (16, 17) of glass fibre reinforced polyester resin, the two-dimensional support element being formed by a honeycomb structure (11) made from plastic, preferably polypropylene and the honeycombs bordering one another (12) extend towards the thickness of the two-dimensional support element, **characterised in that** the component (10, 110) on at least one longitudinal or traverse side is provided with an edge (18, 118) consisting of one or two glass fibre reinforced polyester resin layers (16, 17) bent to the rear side.

2. Component according to Claim 1, **characterised in that** the edge (18, 118) is fully circumferential.

3. Component according to Claim 1 or 2, **characterised in that** the honeycomb structure (11) is lined on both sides with a non-woven fabric cover (14), preferably made from polyester.

4. Component according to at least one of Claims 1 to 3, **characterised in that** on its visible side a further layer (19, 31) is applied to the glass fibre reinforced polyester resin layer (16, 17).

5. Component according to Claim 4, **characterised in that** the further layer on the visible side is a surface-fine layer (19) preferably made from polyester resin.

6. Component according to Claim 4, **characterised in that** the further layer is formed from floor tiles (31), granite or similar.

7. Component according to at least one of the above claims, **characterised in that** it is a wall component (10), in the case of which the two-dimensional support element (11) is provided over the whole surface.

8. Component according to at least one of Claims 1 to 6, **characterised in that** it is a shower or similar tray (30), in the case of which the two-dimensional support element (11) is provided at least partially on the floor.

## Revendications

1. Composant (10, 110) avec un élément de support plan (11), qui est revêtu, sur les deux surfaces extérieures, d'une couche (16, 17) réalisée dans une résine de polyester renforcée par des fibres de verre, l'élément de support plan est formé par un agencement alvéolaire (11) réalisé en matière plastique, de préférence en polypropylène, et les alvéoles (12) adjacentes les unes aux autres s'étendent dans la direction de l'épaisseur de l'élément de support plan,
**caractérisé en ce que** le composant (10, 110) est doté, sur au moins un côté longitudinal ou transversal, d'un bord (18, 118) incurvé vers le côté arrière, constitué d'une ou des deux couches en résine de polyester renforcée par des fibres de verre (16, 17).

2. Composant selon la revendication 1, **caractérisé en ce que** le bord (18, 118) est circulaire.

3. Composant selon l'une quelconque des revendications 1 ou 2, **caractérisé en ce que** l'agencement alvéolaire (11) est recouvert des deux côtés d'un matelas de couverture (14), de préférence en polyester.

4. Composant selon au moins l'une quelconque des revendications 1 à 3, **caractérisé en ce que**, sur son côté visible, une autre couche (19, 31) est apposée sur la couche en résine de polyester renforcée par des fibres de verre (16, 17) .

5. Composant selon la revendication 4, **caractérisé en ce que** l'autre couche sur le côté visible est une couche fine superficielle (19) de préférence en résine de polyester.

6. Composant selon la revendication 4, **caractérisé en ce que** l'autre couche est formée à l'aide de granite ou similaire, à l'aide d'un carrelage.

7. Composant selon au moins l'une quelconque des revendications précédentes, **caractérisé en ce qu'**il s'agit d'un composant de cloison (10) dans lequel l'élément de support plan (11) est prévu en étant complètement plan.

8. Composant selon l'une quelconque des revendications 1 à 6, **caractérisé en ce qu'**il s'agit d'une douche ou baignoire (30), dans laquelle l'élément de support plan (11) est prévu au moins en partie du côté du sol.
